# FASCICULE DE BREVET EUROPEEN

(11) **EP 0 901 937 B1**
(45) Date de publication et mention de la délivrance du brevet: **08.01.2003**
(21) Numéro de dépôt: 98401764.0
(22) Date de dépôt: 10.07.1998
(51) Int. Cl.: B60R 1/10

(54) **Rétroviseur pour véhicules automobiles**
Rückblickspiegel für Kraftfahrzeuge
Rear view mirror for vehicles

(30) Priorité: 10.09.1997 FR 9711245
(43) Date de publication de la demande: 17.03.1999
(73) Titulaire: AUTOMOBILES PEUGEOT, 75116 Paris (FR); AUTOMOBILES CITROEN, 92200 Neuilly-sur-Seine (FR)
(72) Inventeur: Salaquet, Didier, 92130 Issy Les Moulineaux (FR)
(74) Mandataire: Lanceplaine, Jean-Claude

(56) Documents cités:
- WO-A-96/15921
- WO-A-96/31365
- FR-A- 1 079 274

## Description

La présente invention a pour objet un rétroviseur pour véhicules automobiles, comme par exemple un rétroviseur latéral monté sur le côté des véhicules ou un rétroviseur central monté sur le toit.

Les véhicules automobiles sont équipés notamment de rétroviseurs latéraux qui sont chacun placés à l'angle inférieur avant du cadre d'une fenêtre latérale avant afin que le conducteur puisse regarder vers l'arrière du véhicule par l'intermédiaire des rétroviseurs.

Les rétroviseurs montés jusqu'à présent sur les véhicules automobiles sont de différents types.

Les rétroviseurs les plus couramment utilisés sont constitués par un boîtier fixé à l'extérieur du véhicule et comportant un miroir plan.

Mais, pour obtenir une vision correcte vers l'arrière du véhicule, le miroir doit être suffisamment grand si bien que les boîtiers ont des dimensions telles qu'ils sont difficilement intégrables au style du véhicule et offrent une prise au vent considérable ce qui réduit les performances générales du véhicule notamment la consommation et la vitesse.

Compte tenu des dimensions des boîtiers, il est indispensable de prévoir un système d'escamotage pour le franchissement de passages étroits.

D'autre part, ce genre de rétroviseurs présente un angle mort important ce qui nuit à la sécurité.

Dans ce type de rétroviseurs, le miroir peut être constitué par un miroir bombé pour agrandir le champ de vision afin de réduire les angles morts.

Mais, ces rétroviseurs ont pour principal inconvénient de ne pas conserver la notion de vitesse d'approche des véhicules observés ce qui peut nuire à la sécurité.

On connaît également des rétroviseurs qui se composent de lentilles de Fresnel et d'un miroir plan formant un ensemble fixe logé dans un boîtier comportant une première partie débouchant à l'intérieur du véhicule et une seconde partie débouchant à l'extérieur de ce véhicule.

Ce genre de rétroviseurs nécessite un ajustement latéral et/ou horizontal des éléments optiques pour satisfaire aux différentes morphologies des conducteurs et aux différentes positions qu'ils peuvent prendre dans le siège.

On connaît, dans le document WO-A-96/31365, un rétroviseur pour véhicules automobiles correspondent au préambule de la revendication 1, du type comprenant un boîtier formé d'une première partie débouchant à l'intérieur du véhicule et d'une seconde partie débouchant à l'extérieur du véhicule et dont les axes convergent vers le fond du boîtier, un élément optique réfléchissant disposé dans le fond de ce boîtier et au moins un élément optique de mise en forme des rayons lumineux et des moyens de commande du pivotement de l'élément optique réfléchissant.

Mais, ce rétroviseur ne convient que pour des réglages de très faibles amplitudes.

L'invention a pour but de proposer un rétroviseur pour véhicules automobiles qui permet d'éviter les inconvénients précédemment mentionnés et d'obtenir, par des moyens simples et peu coûteux, un réglage précis des éléments optiques selon les exigences des conducteurs et qui présente une faible surface frontale, tout en possédant un champ de vision permettant de supprimer les angles morts.

L'invention a donc pour objet un rétroviseur pour véhicules automobiles, du type comprenant :
- un boîtier formé d'une première partie débouchant à l'intérieur du véhicule et d'une seconde partie débouchant à l'extérieur du véhicule et dont les axes convergent vers le fond du boîtier,
- un élément optique réfléchissant disposé dans le fond de ce boîtier, et
- au moins un élément optique de mise en forme des rayons lumineux traversant le boîtier et monté dans ledit boîtier,
caractérisé en ce qu'il comprend des moyens de commande du pivotement de l'élément optique réfléchissant, commandant simultanément le pivotement dudit élément optique de mise en forme, l'angle de pivotement de cet élément optique de mise en forme étant égal à deux fois plus ou moins 5 % l'angle de pivotement de cet élément optique réfléchissant.

Selon d'autres caractéristiques:
- l'angle de pivotement dudit élément optique de mise en forme est égal à deux fois l'angle de pivotement dudit élément optique réfléchissant,
- l'élément optique réfléchissant est monté sur un support pivotant autour d'un axe passant par le centre dudit élément optique réfléchissant et ledit élément optique de mise en forme est monté sur un support pivotant autour de cet axe,
- les moyens de commande sont formés par un levier dont une extrémité débouche à l'intérieur du véhicule et dont l'autre extrémité est montée pivotante dans le boîtier autour d'un axe parallèle à l'axe passant par le centre de l'élément optique réfléchissant et par deux organes de liaison du levier respectivement avec le support dudit élément optique réfléchissant et avec le support dudit élément optique de mise en forme, l'axe de pivotement du levier étant situé entre l'axe passant par le centre de l'élément optique réfléchissant et l'organe de liaison avec le support dudit élément optique réfléchissant,
- les distances séparant l'axe passant par le centre de l'élément optique réfléchissant avec l'axe de pivotement du levier et avec les deux organes de liaison sont déterminées pour obtenir les angles de pivotement respectivement dudit élément optique réfléchissant et dudit élément optique de mise en forme dans le rapport souhaité,
- l'organe de liaison du levier avec le support de l'élément optique réfléchissant est formé par un ergot solidaire dudit support et monté déplaçable en translation dans une lumière ménagée dans ledit levier,
- l'organe de liaison du levier avec le support dudit élément optique de mise en forme est formé par un ergot solidaire dudit support et monté déplaçable en translation dans une lumière ménagée dans ledit levier,
- l'élément optique réfléchissant est formé par un miroir plan monté dans le support pivotant correspondant et ledit élément de mise en forme est formé, d'une part, par au moins une lentille convergente montée dans le support pivotant correspondant à l'intérieur de la première partie du boîtier et, d'autre part, par au moins une lentille divergente fixe montée à l'intérieur de la seconde partie dudit boîtier,
- l'élément optique réfléchissant est formé par un miroir plan monté dans le support pivotant correspondant et ledit élément optique de mise en forme est formé, d'une part, par au moins une lentille convergente fixe montée à l'intérieur de la première partie du boîtier et, d'autre part, par au moins une lentille divergente montée dans le support pivotant correspondant à l'intérieur de la seconde partie dudit boîtier,
- l'élément optique réfléchissant est formé par un miroir sphérique convexe monté dans le support pivotant correspondant et ledit élément optique de mise en forme est formé par au moins une lentille convergente montée dans le support pivotant correspondant à l'intérieur de la première partie du boîtier,
- l'élément optique réfléchissant est formé par un miroir sphérique concave monté dans le support pivotant correspondant et ledit élément optique de mise en forme est formé par au moins une lentille divergente montée dans le support pivotant correspondant à l'intérieur de la seconde partie du boîtier.

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique de dessus d'un véhicule automobile équipé de rétroviseurs conformes à l'invention,
- la Fig. 2 est une vue schématique en coupe transversale d'un premier mode de réalisation d'un rétroviseur conforme à l'invention,
- la Fig. 3 est une vue de côté et en coupe de la première partie du boîtier du rétroviseur de la Fig. 2,
- la Fig.4 est une vue schématique en coupe transversale d'un second mode de réalisation d'un rétroviseur conforme à l'invention,
- la Fig.5 est une vue de côté et en coupe de la première partie du boîtier du rétroviseur de la Fig. 4,
- la Fig. 6 est une vue schématique montrant le réglage des éléments optiques du rétroviseur conforme à l'invention.

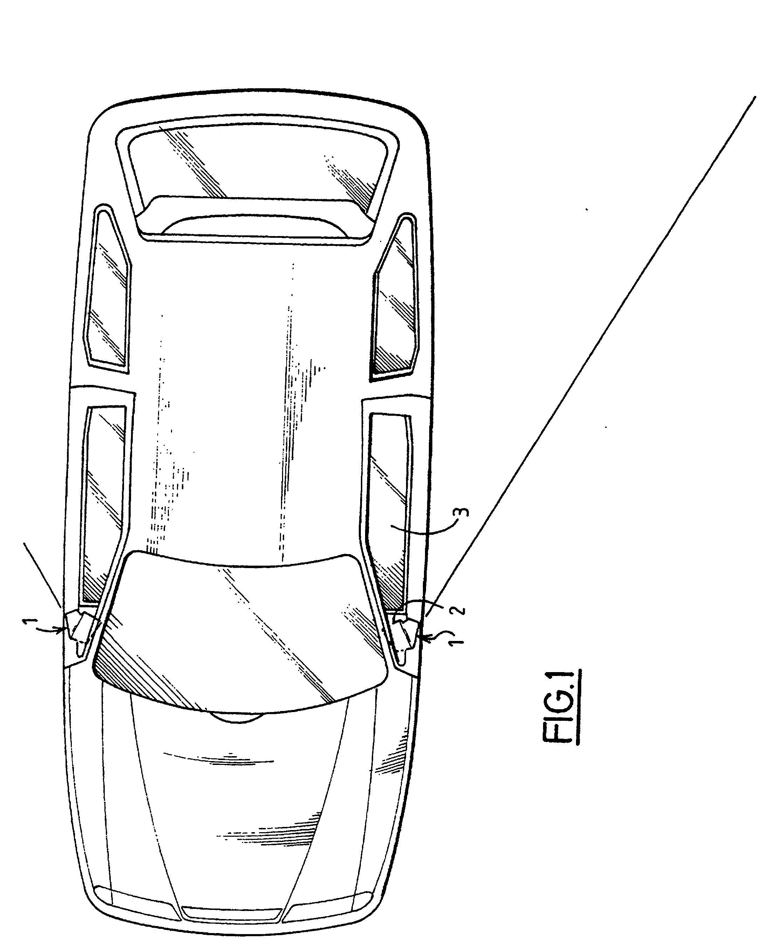

Sur la Fig.1 on a représenté schématiquement un véhicule automobile équipé de deux rétroviseurs latéraux 1 qui sont chacun placés à l'angle inférieur avant du cadre 2 d'une fenêtre 3 latérale avant afin que le conducteur puisse regarder vers l'arrière du véhicule.

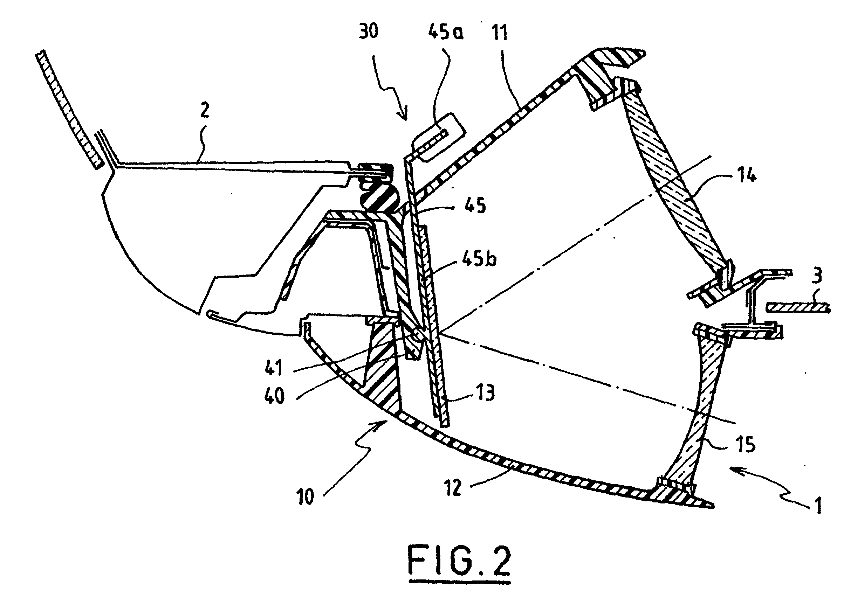

Ainsi que représenté sur les Figs. 2 à 5, le rétroviseur 1 comprend un boîtier désigné dans son ensemble par la référence 10 formé d'une première partie 11 débouchant à l'intérieur du véhicule et d'une seconde partie 12 débouchant à l'extérieur de ce véhicule.

Les parties 11 et 12 ont par exemple une forme générale tubulaire et les axes de ces parties 11 et 12 convergent vers le fond du boîtier 10.

Des éléments d'étanchéité sont interposés entre le boîtier 10 et le cadre 2.

D'une manière générale, le rétroviseur 1 comporte également un élément optique réfléchissant disposé dans le fond du boîtier 10 et au moins un élément optique de mise en forme des rayons lumineux traversant le boîtier 10 et monté dans ledit boîtier 10.

L'élément optique réfléchissant est formé par un miroir plan 13 disposé dans le fond du boîtier 10 et l'élément optique de mise en forme des rayons lumineux est formé, d'une part, par au moins une lentille convergente 14 disposée à l'extrémité avant de la première partie 11 et, d'autre part, par au moins une lentille divergente 15 disposée à l'extrémité avant de la seconde partie 12 du boîtier 10.

Ainsi, grâce à l'association des éléments optiques 13, 14 et 15 le conducteur peut regarder vers l'arrière du véhicule.

Le rétroviseur 1 comprend aussi des moyens 30 de commande du pivotement de l'élément optique réfléchissant 13.

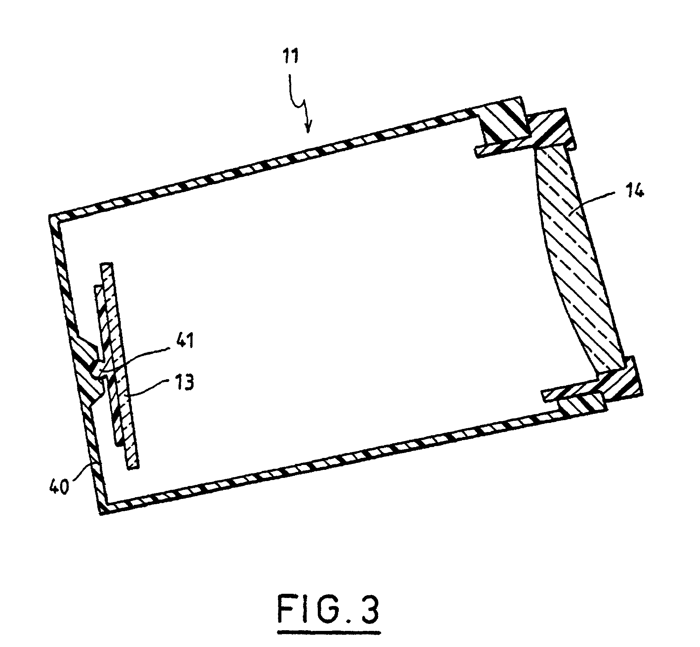

En se reportant maintenant aux Figs. 2 et 3, on va décrire un premier mode de réalisation du rétroviseur 1.

Dans ce mode de réalisation, les lentilles convergente 14 et divergente 15 sont fixes et le miroir plan 13 est monté articulé en son centre sur un support 40 au moyen d'un système à rotule 41.

Les moyens de commande 30 agissent uniquement sur le miroir plan 13.

Ces moyens de commande 30 sont formés par un levier 45 dont une extrémité 45a débouche à l'intérieur du véhicule et dont l'autre extrémité 45b est solidaire du miroir plan 13.

Ce mode de réalisation convient notamment pour de très faibles amplitudes de réglage.

Selon une variante, les moyens de commande 30 peuvent être constitués par exemple par un moteur électrique.

Selon une autre variante, les moyens de commande du pivotement du miroir plan peuvent être constitués par un ou plusieurs organes de réglage reliés audit miroir plan et qui permettent de régler en usine ou au garage le rétroviseur dans une position assurant aux conducteurs de différentes morphologies une vision idéale vers l'arrière du véhicule.

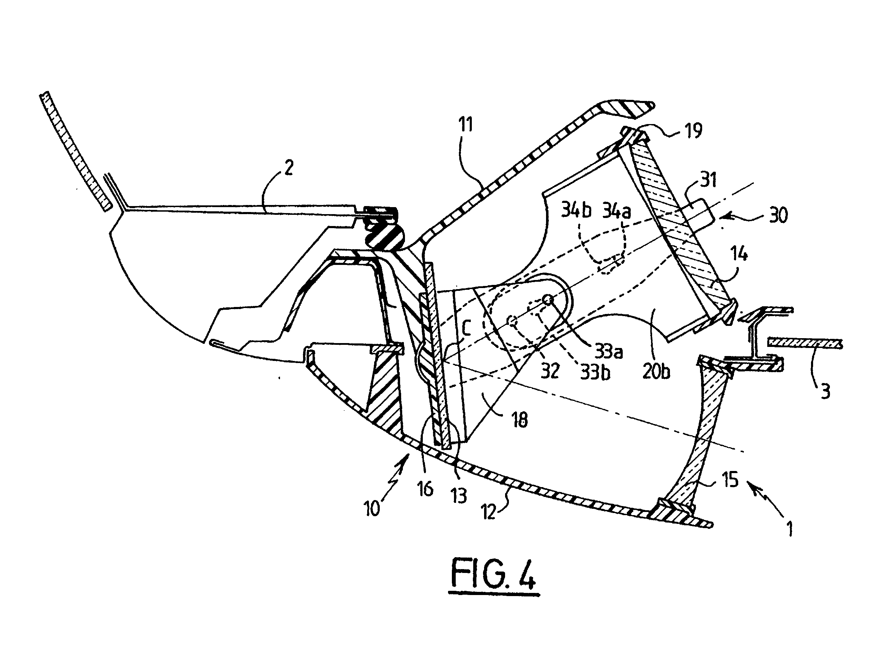

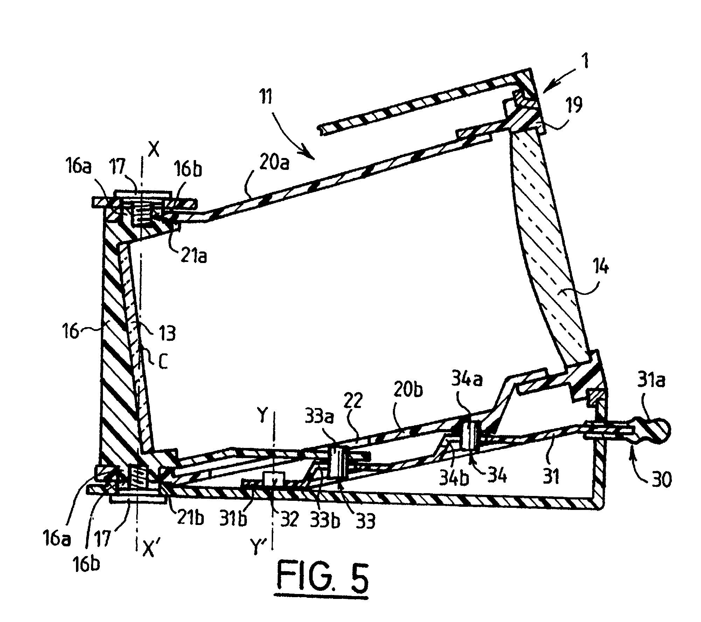

Selon un autre mode de réalisation représenté sur les Figs. 4 et 5, le rétroviseur 1 comprend des moyens 30 de commande du pivotement simultané de l'élément optique réfléchissant 13 et de l'un des éléments composant l'élément optique de mise en forme, c'est à dire la lentille convergente 14 ou la lentille divergente 15.

Dans l'exemple de réalisation représenté sur les Figs. 4 et 5, les moyens de commande 30 agissent simultanément sur le miroir plan 13 et la lentille convergente 14.

Pour cela, le miroir plan 13 est disposé dans un support 16 en forme de cadre qui comporte sur ses bords, respectivement supérieur et inférieur, un épaulement 16a de section circulaire muni d'un alésage central 16b.

Dans chaque alésage 16b est positionné un pion 17 solidaire de la première partie 11 du boîtier 10.

Les pions 17 forment un axe XX' de pivotement du support 16 et du miroir 13, qui passe par le centre C de ce miroir 13.

D'autre part, le support 16 comporte, à sa partie inférieure, une patte 18 dirigée vers l'extrémité avant de la première partie 11 du boîtier 10.

Cette patte 18 solidaire du support 16 est destinée à coopérer avec les moyens 30 de commande du pivotement du miroir 13, comme on le verra ultérieurement.

La lentille convergente 14, disposée à l'extrémité avant de la première partie 11 du boîtier 10, est montée dans un support 19 en forme de cadre qui comporte sur son bord supérieur une patte 20a munie à son extrémité libre d'un orifice 21a et sur son bord inférieur une patte 20b munie à son extrémité libre d'un orifice 21b.

Les pattes 20a et 20b s'étendent vers l'extrémité arrière du boîtier 10.

L'épaulement supérieur 16a du support 16 est positionné dans l'orifice 21a de la patte 20a et l'épaulement inférieur 16a de ce support 16 est positionné dans l'orifice 21b de la patte 20b de telle manière que l'ensemble constitué par la lentille convergente 14, le support 19 et les pattes 20a et 20b pivotent également autour de l'axe XX' passant par le centre du miroir 13, c'est à dire le même axe de pivotement du miroir 13 et de son support 16.

Les moyens 30 de commande du pivotement simultané du miroir 13 et de la lentille convergente 14 sont formés par un levier 31 disposé dans le boîtier 10, au-dessous de la patte 18 du support 16 et de la patte inférieure 20b du support 19.

Ce levier 31 comporte une première extrémité 31a qui débouche à l'intérieur du véhicule automobile et une seconde extrémité 31b qui est montée pivotante dans la première partie 11 du boîtier 10 par l'intermédiaire d'un pion 32.

Ce pion 32 constitue un axe YY' de pivotement du levier 31 et qui est parallèle à l'axe XX' autour duquel pivote le miroir 13 et la lentille convergente 14.

Le levier 31 est relié par un premier organe de liaison 33 avec la patte 18 du support 16 du miroir 13 et par un second organe de liaison 34 avec la patte inférieure 20b du support 19 de la lentille convergente 14.

Le premier organe de liaison 33 est formé par un ergot 33a solidaire de la patte 18 du support 16 et qui est monté déplaçable en translation dans une lumière 33b ménagée dans le levier 31.

Le second organe de liaison 34 est également formé par un ergot 34 solidaire de la patte inférieure 20b du support 19 et qui est monté déplaçable en translation dans une lumière 34b ménagée dans le levier 31.

Les ergots 33a et 34b s'étendent parallèlement à l'axe YY' de pivotement du levier 31 ainsi qu'à l'axe XX' de pivotement du miroir 13 et de la lentille convergente 14.

Par ailleurs, le pion 32 formant l'axe YY' est situé entre l'axe XX' passant par le centre du miroir 13 et l'axe formé par l'ergot 33a.

Comme représenté à la Fig. 5, la patte inférieure 20b du support 19 comporte une ouverture 22 permettant le passage la patte 18 du support 16.

Les distances séparant l'axe XX' passant par le centre du miroir 13 avec, d'une part, l'axe YY' de pivotement du levier 31 et, d'autre part, avec les deux organes de liaison, respectivement 33 et 34 sont déterminées pour obtenir les angles de pivotement respectivement dudit miroir 13 et de ladite lentille convergente 14 dans un rapport déterminé.

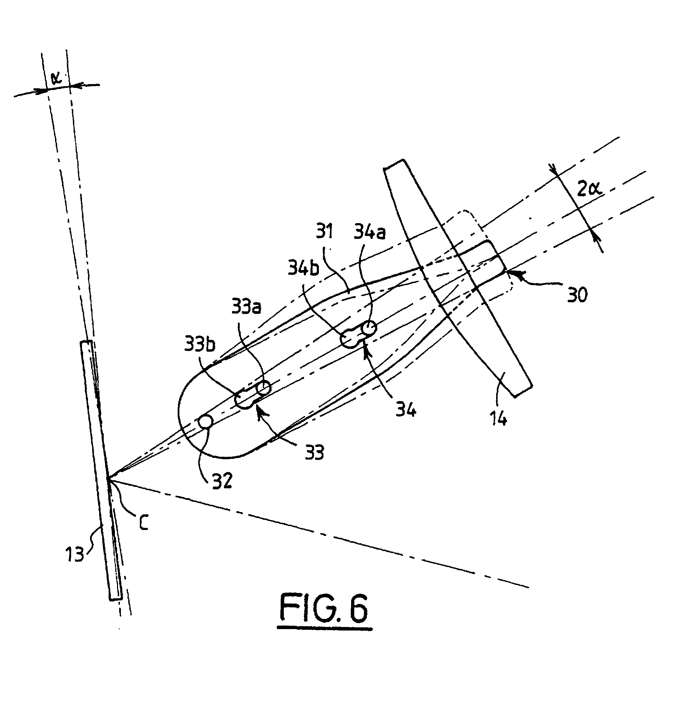

Ainsi que représenté à la Fig.6, le pivotement du levier 31 autour de l'axe YY' d'un côté ou de l'autre de son axe longitudinal provoque le pivotement du miroir 13 d'un angle α grâce à l'organe de liaison 33 et le pivotement de la lentille convergente 14 d'un angle égal à 2α plus ou moins 5% grâce à l'organe de liaison 34.

De préférence, l'angle de pivotement de la lentille convergente 14 est égal à deux fois l'angle de pivotement du miroir plan 13.

Au cours du pivotement du levier 31, l'ergot 33a se déplace en translation dans la lumière 33b et l'ergot 34a se déplace en translation dans la lumière 34b.

Ainsi, le levier 31 commande le pivotement simultané du miroir 13 et de la lentille convergente 14 dans le rapport déterminé et qui est fonction des distances séparant l'axe XX' avec l'axe YY' et avec les deux organes de liaison respectivement 33 et 34.

Pour obtenir un rapport différent, il suffit de modifier les distances entre l'axe XX', l'axe YY' et les deux organes de liaison 33 et 34.

Dans ce mode de réalisation, le miroir plan 13 et la lentille convergente 14 sont pivotants tandis que la lentille divergente 15 est fixe.

D'autres solutions peuvent être envisagées.

En effet, l'élément optique réfléchissant constitué par le miroir plan 13 peut être monté dans un support 16 pivotant autour de l'axe XX', comme dans le précédent mode de réalisation, tandis que la lentille divergente 15 peut être montée dans un support pivotant autour de l'axe XX' passant par le centre du miroir plan 13.

Dans ce cas, la lentille convergente 14 est fixe et la forme du levier 31 est adaptée pour commander le pivotement simultané de ce miroir plan 13 et de la lentille divergente 15.

Selon un autre mode de réalisation, l'élément optique réfléchissant 13 est formé par un miroir sphérique convexe monté dans le support 16 pivotant autour de l'axe XX' et l'élément optique de mise en forme 14 est, dans ce cas, constitué par au moins une lentille convergente montée dans le support 19 pivotant autour de l'axe XX' à l'intérieur de la première partie 11 du boîtier 10.

Selon encore un autre mode de réalisation, l'élément optique réfléchissant 13 est formé par un miroir sphérique concave monté dans le support 16 pivotant autour de l'axe XX' et l'élément optique 15 de mise en forme est formé par au moins une lentille divergente montée dans un support pivotant autour de l'axe XX' à l'intérieur de la seconde partie 12 du boîtier 10.

On peut également prévoir un réglage dans le plan vertical des éléments optiques indépendant du réglage latéral ou combiné avec celui-ci.

D'autre part, le rétroviseur 1 peut également être monté sur le toit du véhicule.

Les moyens de commande de l'élément optique réfléchissant et de l'élément optique de mise en forme peuvent être constitués par un ou plusieurs moteurs électriques.

Dans le premier mode de réalisation précédemment décrit et représenté sur les Figs. 2 et 3, la lentille concave 14 peut avoir une surface plus grande que dans les autres modes de réalisation.

Le rétroviseur selon l'invention permet donc d'obtenir, par des moyens simples et peu coûteux, un réglage précis des éléments optiques en fonction de la morphologique du conducteur et de sa position dans le siège et qui présente une faible surface frontale améliorant les performances liées à la pénétration dans l'air du véhicule, comme par exemple, la consommation et la vitesse.

Compte tenu de cette faible surface frontale, il n'est pas nécessaire de prévoir pour le rétroviseur selon l'invention un système d'escamotage.

Enfin, le rétroviseur selon l'invention permet d'augmenter le champ de vision vers l'arrière du véhicule et, de ce fait, de supprimer les angles morts, tout en conservant la notion de vitesse d'approche des véhicules provenant de l'arrière.

## Revendications

1. Rétroviseur pour véhicules automobiles, du type comprenant :
- un boîtier (10) formé d'une première partie (11) débouchant à l'intérieur du véhicule et d'une seconde partie (12) débouchant à l'extérieur du véhicule et dont les axes convergent vers le fond du boîtier (10),
- un élément optique réfléchissant (13) disposé dans le fond de ce boîtier (10), et
- au moins un élément optique (14, 15) de mise en forme des rayons lumineux traversant le boîtier (10) et monté dans ledit boîtier (10),
- des moyens (30) de commande du pivotement de l'élément optique réfléchant (13),
**caractérisé en ce que** les moyens (30) de commande du pivotement de l'élément optique réfléchissant (13), commandant simultanément le pivotement dudit élément optique de mise en forme (14, 15), l'angle de pivotement de cet élément optique de mise en forme (14, 15) étant égal à deux fois plus ou moins 5 % l'angle de pivotement de cet élément optique réfléchissant (13).

2. Rétroviseur selon la revendication 1, **caractérisé en ce que** l'angle de pivotement dudit élément optique de mise en forme (14, 15) est égal à deux fois l'angle de pivotement dudit élément optique réfléchissant (13).

3. Rétroviseur selon la revendication 1, **caractérisé en ce que** l'élément optique réfléchissant (13) est monté sur un support (16, 18) pivotant autour d'un axe passant par le centre dudit élément optique réfléchissant (13) et ledit élément optique de mise en forme (14, 15) est monté sur un support (19, 20a, 20b) pivotant autour de cet axe.

4. Rétroviseur selon l'une quelconque des revendications 1 à 3, **caractérisé en ce que** les moyens (30) de commande sont formés par un levier (31) dont une extrémité (31a) débouche à l'intérieur du véhicule et dont l'autre extrémité (31b) est montée pivotante dans le boîtier (10) autour d'un axe parallèle à l'axe passant par le centre de l'élément optique réfléchissant (13) et par deux organes de liaison (33, 34) du levier (31) respectivement avec le support (16, 18) dudit élément optique réfléchissant (13) et avec le support (19, 20a, 20b) dudit élément optique de mise en forme (14, 15), l'axe de pivotement du levier (31) étant situé entre l'axe passant par le centre de l'élément optique réfléchissant (13) et l'organe de liaison (33) avec le support (16, 18) dudit élément réfléchissant (13).

5. Rétroviseur selon l'une quelconque des revendications 1 à 4, **caractérisé en ce que** les distances séparant l'axe passant par le centre de l'élément optique réfléchissant (13) avec l'axe de pivotement du levier (31) et avec les deux organes de liaison (33, 34) sont déterminées pour obtenir les angles de pivotement respectivement dudit élément optique réfléchissant (13) et dudit élément optique de mise en forme (14, 15) dans le rapport souhaité.

6. Rétroviseur selon la revendication 4 ou 5, **caractérisé en ce que** l'organe de liaison (33) du levier (31) avec le support (16, 18) de l'élément optique réfléchissant (13) est formé par un ergot (30a) solidaire dudit support (16, 18) et monté déplaçable en translation dans une lumière (33b) ménagée dans ledit levier (31).

7. Rétroviseur selon la revendication 4 ou 5, **caractérisé en ce que** l'organe de liaison (34) du levier (31) avec le support (19, 20a, 20b) dudit élément optique de mise en forme (14, 15) est formé par un ergot (34a) solidaire dudit support (19, 20a, 20b) et monté déplaçable en translation dans une lumière (34b) ménagée dans ledit levier (31).

8. Rétroviseur selon l'une quelconque des revendications 1 à 7, **caractérisé en ce que** l'élément optique réfléchissant est formé par un miroir plan (13) monté dans le support (16, 18) pivotant correspondant et ledit élément optique de mise en forme est formé, d'une part, par au moins une lentille convergente (14) montée dans le support (19, 20a, 20b) pivotant correspondant à l'intérieur de la première partie (11) du boîtier (10) et, d'autre part, par au moins une lentille divergente (15) fixe montée à l'intérieur de la seconde partie (12) dudit boîtier (10).

9. Rétroviseur selon l'une quelconque des revendications 1 à 7, **caractérisé en ce que** l'élément optique réfléchissant est formé par un miroir plan (13) monté dans le support (16n 18) pivotant correspondant et ledit élément optique de mise en forme est formé, d'une part, par au moins une lentille convergente (14) fixe montée à l'intérieur de la première partie (11) du boîtier (10) et, d'autre part, par au moins une lentille divergente (15) montée dans le support pivotant correspondant à l'intérieur de la seconde partie (12) dudit boîtier (10).

10. Rétroviseur selon l'une quelconque des revendications 1 à 7, **caractérisé en ce que** l'élément optique réfléchissant (13) est formé par un miroir sphérique convexe monté dans le support (16, 18) pivotant correspondant et ledit élément optique de mise en forme est formé par au moins une lentille convergente (14) montée dans le support (19, 20a, 20b) pivotant correspondant à l'intérieur de la première partie (11) du boîtier (10).

11. Rétroviseur selon l'une quelconque des revendications 1 à 7, **caractérisé en ce que** l'élément optique réfléchissant (13) est formé par un miroir sphérique concave monté dans le support (16, 18) pivotant correspondant et ledit élément optique de mise en forme est formé par au moins une lentille divergente (15) montée dans le support pivotant correspondant à l'intérieur de la seconde partie (13) du boîtier (10).

## Patentansprüche

1. Rückspiegel für Kraftfahrzeuge mit
- einem Gehäuse (10), das aus einem ersten Teil (11), der im Inneren des Fahrzeugs mündet, und einem zweiten Teil (12) besteht, der an der Aussenseite des Fahrzeugs mündet, wobei deren Achsen zum Boden des Gehäuses (10) zusammenlaufen,
- einem reflektierenden optischen Element (13), das sich im Boden des Gehäuses (10) befindet,
- wenigstens einem optischen Element (14, 15) zum Formen der Lichtstrahlen, die durch das Gehäuse (10) gehen, das im Gehäuse (10) angeordnet ist, und
- Einrichtungen (30) zum Steuern der Schwenkbewegung des reflektierenden optischen Elementes (13),
**dadurch gekennzeichnet, dass** die Einrichtungen (30) zum Steuern der Schwenkbewegung des reflektierenden optischen Elementes (13) gleichzeitig die Schwenkbewegung des optischen Elementes (14, 15) zum Formen steuert, wobei der Winkel der Schwenkbewegung dieses optischen Elementes (14, 15) zum Formen gleich dem Doppelten +/- 5 % des Winkels der Schwenkbewegung des reflektierenden optischen Elementes (13) ist.

2. Rückspiegel nach Anspruch 1, **dadurch gekennzeichnet, dass** der Winkel der Schwenkbewegung des optischen Elementes (14, 15) zum Formen gleich dem Doppelten des Winkels der Schwenkbewegung des reflektierenden optischen Elementes (13) ist.

3. Rückspiegel nach Anspruch 1, **dadurch gekennzeichnet, dass** das reflektierende optische Element (13) an einem Halter (16, 18) angebracht ist, der um eine Achse schwenkt, die durch die Mitte des reflektierenden optischen Elementes (13) geht, und das optische Element (14, 15) zum Formen an einem Halter (19, 20a, 20b) angebracht ist, der um diese Achse schwenkt.

4. Rückspiegel nach einem der Ansprüche 1 bis. 3, **dadurch gekennzeichnet, dass** die Einrichtungen (30) zum Steuern aus einem Hebel (31), dessen eines Ende (31a) im Inneren des Fahrzeuges mündet und dessen anderes Ende (31b) im Gehäuse (10) um eine Achse schwenkbar angebracht ist, die parallel zu der Achse verläuft, die durch die Mitte des reflektierenden optischen Elementes (13) geht, und aus zwei Verbindungselementen (33, 34) des Hebels (31) jeweils mit dem Halter (16, 18) des reflektierenden optischen Elementes (13) und mit dem Halter (19, 20a, 20b) des optischen Elementes (14, 15) zum Formen besteht, wobei sich die Achse der Schwenkbewegung des Hebels (31) zwischen der Achse, die durch die Mitte des reflektierenden optischen Elementes (13) geht,-und dem Verbindungselement (33) mit dem Halter (16, 18) des reflektierenden Elementes (13) befindet.

5. Rückspiegel nach einem der Ansprüche 1 bis 4, **dadurch gekennzeichnet, dass** die Abstände, die die Achse, die durch die Mitte des reflektierenden optischen Elementes (13) geht, von der Achse der Schwenkbewegung des Hebels (31) und von den beiden Verbindungselementen (33, 34) trennen, so bestimmt sind, dass Winkel der Schwenkbewegung jeweils des reflektierenden optischen Elementes (13) und des optischen Elementes (14, 15) zum Formen im gewünschten Verhältnis erhalten werden.

6. Rückspiegel nach Anspruch 4 oder 5, **dadurch gekennzeichnet, dass** das Verbindungselement (33) des Hebels (31) mit dem Halter (16, 18) des reflektierenden optischen Elementes (13) aus einem Stift (30a) besteht, der fest mit dem Halter (16, 18) verbunden ist und translationsbeweglich in einem Langloch (33b) angeordnet ist, das im Hebel (31) vorgesehen ist.

7. Rückspiegel nach Anspruch 4 oder 5, **dadurch gekennzeichnet, dass** das Verbindungselement (34) des Hebels (31) mit dem Halter (19, 20a, 20b) des optischen Elementes (14, 15) zum Formen aus einem Stift (34a) besteht, der fest mit dem Halter (19, 20a, 20b) verbunden ist und translationsbeweglich in einem Langloch (34b) angeordnet ist, dass in dem Hebel (31) vorgesehen ist.

8. Rückspiegel nach einem der Ansprüche 1 bis 7, **dadurch gekennzeichnet, dass** das reflektierende optische Element aus einem ebenen Spiegel (13) besteht, der im entsprechend schwenkbaren Halter (16, 18) angebracht ist, und das optische Element zum Formen einerseits von wenigstens einer Konvexlinse (14), die im entsprechend schwenkbaren Halter (19, 20a, 20b) im Inneren der ersten Teils (11) des Gehäuses (10) angebracht ist, und andererseits aus wenigstens einer Konkavlinse (15) besteht, die fest im Inneren des zweiten Teils (12) des Gehäuses (10) angebracht ist.

9. Rückspiegel nach einem der Ansprüche 1 bis 7, **dadurch gekennzeichnet**, das reflektierende optische Element aus einem ebenen Spiegel (13) besteht, der im entsprechend schwenkbaren Halter (16, 18) angebracht ist, und das optische Element zum Formen einerseits aus wenigstens einer Konvexlinse (14), die im Inneren des ersten Teils (11) des Gehäuses (10) angebracht ist, und andererseits wenigstens einer Konkavlinse (15) besteht, die im entsprechend schwenkbaren Halter im Inneren des zweiten Teils (12) des Gehäuses (10) angebracht ist.

10. Rückspiegel nach einem der Ansprüche 1 bis 7, **dadurch gekennzeichnet, dass** das reflektierende optische Element (13) aus einem konvexen Kugelspiegel besteht, der im entsprechend schwenkbaren Halter (16, 18) angebracht ist, und das optische Element zum Formen aus wenigstens einer Konvexlinse (15) besteht, die im entsprechend schwenkbaren Halter (19, 20a, 20b) im Inneren des ersten Teils (11) des Gehäuses (10) angebracht ist.

11. Rückspiegel nach einem der Ansprüche 1 bis 7, **dadurch gekennzeichnet, dass** das reflektierende optische Element (13) aus einem konkaven Kugelspiegel besteht, der im entsprechend schwenkbaren Halter (16, 18) angebracht ist, und dass das optische Element zum Formen aus wenigstens einer Konvexlinse (15) besteht, die im entsprechend schwenkbaren Halter im Inneren des zweiten Teils (13) des Gehäuses (10) angebracht ist.

## Claims

1. Rear-view mirror for motor vehicles, of the type comprising:
- a housing (10) formed by a first part (11) that emerges inside the vehicle and by a second part (12) that emerges outside the vehicle, the axes of which parts converge towards the bottom of the housing (10),
- a reflecting optical element (13) arranged in the bottom of the housing (10), and
- at least one optical element (14, 15) for shaping the light rays passing through the housing (10), mounted in said housing (10),
- means (30) for actuating the pivoting of the reflecting optical element (13),
**characterised in that** the means (30) for actuating the pivoting of the reflecting optical element (13) simultaneously actuate the pivoting of said shaping optical element (14, 15), the pivoting angle of the shaping optical element (14, 15) being equal to twice plus or minus 5% the pivoting angle of the reflecting optical element (13).

2. Rear-view mirror according to claim 1, **characterised in that** the pivoting angle of said shaping optical element (14, 15) is equal to twice the pivoting angle of said reflecting optical element (13).

3. Rear-view mirror according to claim 1, **characterised in that** the reflecting optical element (13) is mounted on a support (16, 18) which pivots about an axis passing through the centre of said reflecting optical element (13), and said shaping optical element (14, 15) is mounted on a support (19, 20a, 20b) which pivots about said axis.

4. Rear-view mirror according to any one of claims 1 to 3, **characterised in that** the actuating means (30) are formed by a lever (31), one end (31a) of which emerges inside the vehicle and the other end (31b) of which is mounted in the housing (10) to pivot about an axis which is parallel to the axis passing through the centre of the reflecting optical element (13), and by two members (33, 34) joining the lever (31) with the support (16, 18) of said reflecting optical element (13) and with the support (19, 20a, 20b) of said shaping optical element (14, 15), respectively, the pivoting axis of the lever (31) being located between the axis passing through the centre of the reflecting optical element (13) and the member (33) joining to the support (16, 18) of said reflecting element (13).

5. Rear-view mirror according to any one of claims 1 to 4, **characterised in that** the distances separating the axis passing through the centre of the reflecting optical element (13) from the pivoting axis of the lever (31) and from the two joining members (33, 34) are determined in order to obtain the desired ratio between the pivoting angles of said reflecting optical element (13) and of said shaping optical element (14, 15).

6. Rear-view mirror according to claim 4 or 5, **characterised in that** the member (33) joining the lever (31) with the support (16, 18) of the reflecting optical element (13) is formed by a pin (30a) which is integral with said support (16, 18) and is mounted to be movable in translation in a slot (33b) formed in said lever (31).

7. Rear-view mirror according to claim 4 or 5, **characterised in that** the member (34) joining the lever (31) with the support (19, 20a, 20b) of said shaping optical element (14, 15) is formed by a pin (34a) which is integral with said support (19, 20a, 20b) and is mounted to be movable in translation in a slot (34b) formed in said lever (31).

8. Rear-view mirror according to any one of claims 1 to 7, **characterised in that** the reflecting optical element is formed by a plane mirror (13) mounted in the corresponding pivoting support (16, 18), and said shaping optical element is formed on the one hand by at least one convergent lens (14) mounted in the corresponding pivoting support (19, 20a, 20b) inside the first part (11) of the housing (10) and on the other hand by at least one fixed divergent lens (15) mounted inside the second part (12) of said housing (10),

9. Rear-view mirror according to any one of claims 1 to 7, **characterised in that** the reflecting optical element is formed by a plane mirror (13) mounted in the corresponding pivoting support (16, 18), and said shaping optical element is formed on the one hand by at least one fixed convergent lens (14) mounted inside the first part (11) of the housing (10) and on the other hand by at least one divergent lens (15) mounted in the corresponding pivoting support inside the second part (12) of said housing (10).

10. Rear-view mirror according to any one of claims 1 to 7, **characterised in that** the reflecting optical element (13) is formed by a convex spherical mirror mounted in the corresponding pivoting support (16, 18), and said shaping optical element is formed by at least one convergent lens (14) mounted in the corresponding pivoting support (19, 20a, 20b) inside the first part (11) of the housing (10).

11. Rear-view mirror according to any one of claims 1 to 7, **characterised in that** the reflecting optical element (13) is formed by a concave spherical mirror mounted in the corresponding pivoting support (16, 18), and said shaping optical element is formed by at least one divergent lens (15) mounted in the corresponding pivoting support inside the second part (13) of the housing (10).
